# EUROPEAN PATENT APPLICATION

(11) **EP 3 726 092 A1**
(43) Date of publication of application: **21.10.2020**
(21) Application number: 17934874.3
(22) Date of filing: 15.12.2017
(51) Int. Cl.: F16F 11/00

(54) **FLEXIBLE IMPACT-RESISTANT PROTECTIVE MATERIAL AND FLEXIBLE IMPACT-RESISTANT PROTECTIVE COVER PLATE USING SAME**

(71) Applicant: Shenzhen Royole Technologies Co., Ltd, Shenzhen, Guangdong 518115 (CN)
(72) Inventor: GAN, Zhou, Shenzhen, Guangdong 518000 (CN)
(74) Representative: Mewburn Ellis LLP
(86) International application number: PCT/CN2017/116582
(87) International publication number: WO 2019/113967

(57) **Abstract**

A flexible material for impact protection and a flexible cover for impact protection. The material includes a flexible substrate and a coating. The flexible substrate is provided with a cavity, and the cavity is filled with a shear thickening fluid; the coating covers and is fixed on the flexible substrate to enclose the cavity filled with the shear thickening fluid. A covering plate is made of the above material; the flexible substrate is a transparent substrate that matches the shape of the OLED device being protected; the cavity is set corresponding to the light emitting layer pixel structure of the OLED device; the coating is a transparent coating attached and fixed on the transparent substrate to enclose the cavity; the shear thickening fluid filled in the cavity is a transparent material. The present disclosure provides a flexible material for impact protection and a flexible cover for impact protection that meet bending requirements and have impact resistance.

## Description

### TECHNICAL FIELD

The present disclosure relates to the technical field of flexible display technology, and relates to a flexible material, and particularly to a flexible material for impact protection and a flexible cover for impact protection.

### BACKGROUND

At present, flexible display is an important developing direction of display technology. In order to realize flexible display technology, many technical problems must be overcome. The protective cover of the flexible display is one of the important bottlenecks that restricts the development of flexible display technology.

The traditional hard screen protective cover is mainly a glass cover, which can provide good physical protection such as scratch resistance and impact resistance for the display module, but cannot be bent and cannot meet the requirements of flexible display technology; the existing solution to flexible cover is coating a hardened layer on the polymer film. This solution can solve the problem of scratching to a certain extent, but has no impact resistance.

### SUMMARY

The technical problem to be solved by the present disclosure is to provide a flexible material for impact protection that satisfies the bending requirements and has anti-impact performance.

The present disclosure further addresses a technical problem of providing a flexible cover for impact protection that meets bending requirements and has impact resistance.

The technical solutions adopted by the present disclosure to solve its technical problems are:

A flexible material for impact protection, including a flexible substrate and a coating; the flexible substrate is provided with a cavity; the cavity is filled with a shear thickening fluid; the coating covers and is fixed on the flexible substrate to enclose the cavity filled with the shear thickening fluid.

Further, with respect to the flexible material for impact protection, the coating is fixed on the flexible substrate by bonding or hot melting.

Further, with respect to the flexible material for impact protection, both the flexible substrate and the coating in the flexible substrate are a flexible polymer material.

Further, with respect to the flexible material for impact protection, the flexible substrate and the coating are made of one flexible polymer material, respectively; or the flexible substrate and the coating are made of a composite of two or more types of flexible polymer materials.

Further, with respect to the flexible material for impact protection, the flexible polymer material is selected from at least one of polycarbonate, polyethylene terephthalate, polyimide, and polymethylmethacrylate.

Further, with respect to the flexible material for impact protection, the shear thickening fluid comprises a dispersed phase and a dispersed medium, and the dispersed phase is dispersed in the dispersed medium to form a suspension or a gel.

Further, with respect to the flexible material for impact protection, preferably the dispersed phase is nanoparticle, and a particle size of the nanoparticle is 20-500 nm.

Further, with respect to the flexible material for impact protection, preferably the nanoparticle is spherical, ellipsoidal, pie-shaped, or an edgeless irregularly shaped particle.

Further, with respect to the flexible material for impact protection, preferably the dispersed phase is nanoparticle made of crushed natural minerals or nanoparticle made of a high polymer.

Further, with respect to the flexible material for impact protection, preferably the dispersed phase is selected from at least one of silicon dioxide, polystyrene, polymethyl methacrylate, calcium carbonate, A1203, or glass microspheres.

Further, with respect to the flexible material for impact protection, preferably the dispersed medium is a compound of one or more of water, organic solution, and salt solution.

Further, with respect to the flexible material for impact protection, preferably the organic solution is selected from at least one of ethanol, isopropanol, glycerol, vinyl ethanol, and polyethylene glycol.

Further, with respect to the flexible material for impact protection, preferably the salt solution is selected from a buffer solution or a sodium chloride solution.

Further, with respect to the flexible material for impact protection, preferably the compound is selected from a mixture of glycerin and water.

A flexible cover for impact protection, made of above-mentioned flexible material for impact protection, the flexible substrate is a transparent substrate conforming to a shape of a protected OLED device; the cavity is located corresponding to a pixel of a light emitting layer of the OLED device; the coating is a transparent coating attached to and fixed on the transparent substrate to enclose the cavity; the shear thickening fluid in the cavity is selected from a transparent material.

Further, with respect to the flexible cover for impact protection, preferably a plurality of cavities are arranged in matrix on the flexible substrate, and shapes and sizes of the cavities match shapes and sizes of the pixels of the light emitting layer.

Further, with respect to the flexible cover for impact protection, preferably a shape of a cross section of the cavity is curved or polygonal.

Further, with respect to the flexible cover for impact protection, preferably at least one of an anti-reflection coating and an anti-glaring coating is located on a surface of the flexible substrate.

Further, with respect to the flexible cover for impact protection, preferably a hardened layer is located on a surface of the flexible substrate.

Further, with respect to the flexible cover for impact protection, preferably the shear thickening fluid is selected from a transparent material.

The present disclosure has the following technical effects:

The flexible material for impact protection of the present disclosure selects the flexible substrate as the main body; the flexible substrate is encapsulated with a shear thickening fluid (STF). Because the shear thickening fluid has a strong ability to absorb impact, it is very soft under normal conditions. In the event of high-speed impact or compression, the viscosity of the material sharply increases to make it hard, even close to solid, so as to absorb the external force. When the external force disappears, the material will return to its original soft state. This makes the flexible material for impact protection both flexible to achieve bending and highly resistant to impact.

The flexible cover for impact protection of the present disclosure uses the flexible material for impact protection to make a plate structure used as a covering plate for a display device. In the event of high-speed impact or compression, the viscosity of the material sharply increases to make it hard, even close to solid, so as to absorb the external force. When the external force disappears, the covering plate will return to its original soft state. This makes the covering plate both flexible to achieve bending and highly resistant to impact, thereby expanding the application field of flexible display.

### BRIEF DESCRIPTION OF THE DRAWINGS

The present disclosure will be further described below with reference to the accompanying drawings and embodiments. In the drawings:
FIG. 1 is a schematic structural diagram of a first embodiment of the present disclosure;
FIG. 2 is a schematic structural diagram of a second embodiment of the present disclosure;
FIGS. 3-5 are schematic structural diagrams of cavities in the second embodiment of the present disclosure;
FIG. 6 is a schematic structural diagram of a second implementation manner of the second embodiment of the present disclosure;
FIG. 7 is a schematic structural diagram of a third implementation manner of the second embodiment of the present disclosure.

### DETAILED DESCRIPTION

In order to have a clearer understanding of the technical features, objectives, and effects of the present disclosure, specific implementations of the present disclosure will now be described in detail with reference to the drawings.

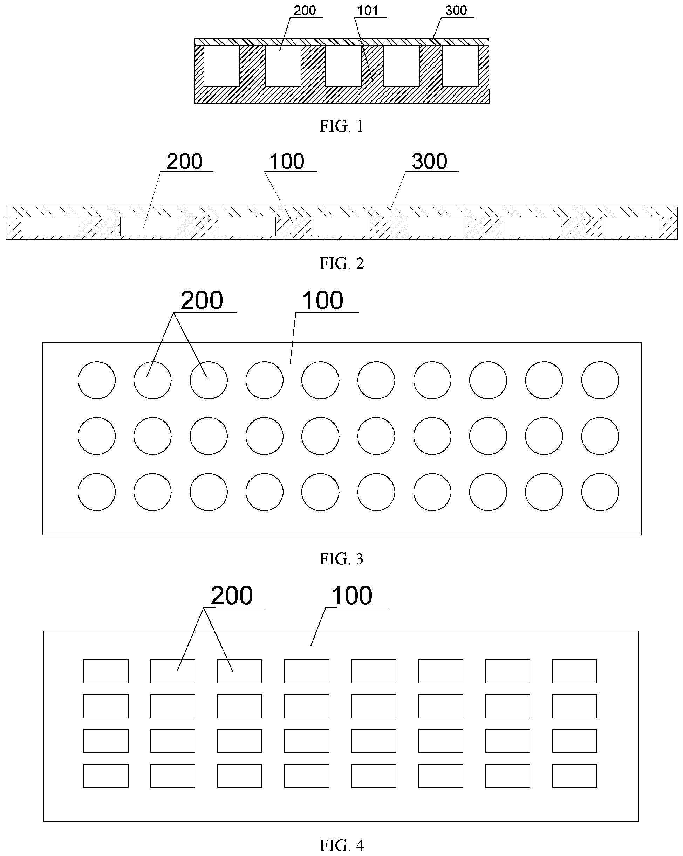

First embodiment, as shown in FIG. 1, a flexible material for impact protection, includes a flexible substrate 101 and a coating 300; the flexible substrate 101 is provided with cavities 200; each of the cavities 200 is filled with a shear thickening fluid; the coating 300 covers and is fixed on the flexible substrate 101 to enclose the cavities 200 filled with the shear thickening fluid.

In order to achieve the characteristics of bending recovery, the flexible substrate 101 is made of a flexible polymer material. In the field of polymer material, there are many materials that can achieve bending. Preferably, the flexible substrate 101 is made of a flexible polymer material, or the flexible substrate 101 is made of a composite of two or more flexible polymer materials. Preferably, the flexible polymer material is at least one of polycarbonate, polyethylene terephthalate, polyimide, and polymethyl methacrylate.

In this embodiment, the flexible substrate 101 is selected from polycarbonate. The above materials can be replaced at will without affecting the implementation of the present disclosure. The shape of the flexible substrate 101 matches the structure of the display component to be protected. The present disclosure is not limited, and an applicable shape is in compliance with the requirements of the present disclosure.

The flexible substrate 101 is provided with cavities 200, and each of the cavities 200 is used to fill the shear thickening fluid. The depth of the cavity 200 must first satisfy: the shock absorption capacity generated by the filled shear thickening fluid can at least resist the impacts that display devices generally suffer from, such as falling from heights, impact by objects, etc. The thickness of substrate101 determines the depth and number of cavities 200, as well as the setting position. Preferably, a plurality of the cavities 200 are arranged in matrix and arranged in the flexible substrate 101.

The cavity 200 is defined in the flexible substrate 101, and can be made by nano imprint technology. For example, hot stamping technology is used to imprint the desired pattern on the flexible substrate 101 to form the cavity 200.

The coating 300 is used to enclose the cavity 200. The coating 300 can be set one-to-one with respect to the cavity 200; each coating 300 corresponds to and encloses one cavity 200. Also, multiple coatings 300 can be set and one coating 300 corresponds to multiple cavities 200. Also, a single coating 300 can be set and all the cavities 200 are enclosed by a single coating 300. There are multiple ways of enclosing, such as fixing the coating 300 on the flexible substrate 101 by bonding or hot melting. The material used for the coating 300 is also a flexible polymer material, which can be the same as or different from that of the flexible substrate 101. The coating 300 may be attached to the flexible substrate 101 by hot melting glue, UV curing glue or hot melting. In this embodiment, the coating 300 is made of polycarbonate. The coating 300 also uses a hot melting glue to bond and enclose the cavity 200 with the flexible substrate.

The part for impact resistance is the shear thickening fluid filled in the cavity 200. The shear thickening fluid includes a dispersed phase and a dispersed medium, and the dispersed phase is dispersed in the dispersed medium to form a suspension or a gel.

The dispersed phase is nanoparticle, and the particle size of the nanoparticle is 20-500 nm. For example, it is selected from 20nm, 50nm, 80nm, 100nm, 150nm, 180nm, 220nm, 250nm, 300nm, 370nm, 440nm, 480nm, and 500nm. The specific choice of particle size can consider the total amount of dispersed phases, the impact resistance requirements and the conditions of the dispersed phase preparation process, and the like to determine, and are not limited herein. The nanoparticles are spherical, ellipsoidal, pie-shaped or edgeless irregularly shaped particles. The dispersed phase is nanoparticle formed by crushed natural minerals or a nanoparticle made of high polymer. The dispersed phase is at least one of silica, polystyrene, polymethyl methacrylate, calcium carbonate, A1203, or glass microspheres. The above materials can be replaced at will without affecting the implementation of the present disclosure.

The dispersed medium is a compound of one or more of water, organic solution, and salt solution. The organic solution is selected from at least one of ethanol, isopropanol, glycerol, vinyl ethanol, and polyethylene glycol. The salt solution is selected as a buffer solution or a sodium chloride solution. The compound is selected from a mixture of glycerol and water. The above materials can be replaced at will without affecting the implementation of the present disclosure.

For different dispersed mediums, different dispersed phases are used, for example: silica is dispersed in isopropanol; calcium carbonate is dispersed in polyethylene glycol. Glass microspheres are dispersed in water; polystyrene is dispersed in a mixture of water and glycerin. The selection of the specific dispersed phase and dispersed medium is performed according to actual needs, and is not limited herein.

Second embodiment, a flexible cover for impact protection, is made of the flexible material for impact protection described in the first embodiment. According to the shape of the OLED device, the flexible material for impact protection is made into a plate structure or a sheet structure.

Specifically, the flexible substrate is a transparent substrate 100 that matches the shape of the OLED device being protected; the cavity 200 is formed corresponding to the pixel of the light emitting layer of the OLED device; the coating 300 is a transparent coating and is attached to and fixed on the transparent substrate 100 to enclose the cavity 200; and the shear thickening fluid filled in the cavity 200 is selected from a transparent material.

The coating 300 covers the upper surface of the transparent substrate 100 and is fixed to the transparent substrate 100. The coating300 encloses the cavity 200 filled with the shear thickening fluid. The flexible material for impact protection of the present disclosure can be used to make a protective cover of the display module. The transparent substrate has the characteristics: the basic requirements of flexibility and transparency. Flexibility means that it can be repeatedly bent and restored. Transparency means that it does not affect the display of the display module. The shape of the cavity 200 encapsulating the sealed thickening fluid matches with the pixel of the light emitting layer to reduce the optical impact on the pixel of the light emitting layer.

Because when only a flexible material is used for the surface of the display module as a covering plate, the thickness is limited and the impact resistance is weak. Therefore, in the embodiments of the present disclosure, the shear thickening fluid is encapsulated in the transparent substrate. Because the shear thickening fluid is soft in the normal state, it does not affect the bending performance of the entire covering plate. In addition, due to the special properties of the shear thickening fluid: it is very soft in the normal state; once it encounters high-speed impact or compression, the viscosity of the material increases sharply and becomes hard, even close to a solid, thereby absorbing the external forces and improving the impact resistance of flexible material. When the external force disappears, the material will return to its original soft state, achieving the bending performance of the material.

As shown in FIG. 2, in terms of structure, the covering plate includes a transparent substrate 100 and a coating 300. The transparent substrate 100 is provided with a cavity 200 for filling a shear thickening fluid, and the coating 300 covers a fixed transparent substrate to enclose the cavity 200 for filling the thick thickening fluid.

The transparent substrate 100 is the main structure used to make the protective covering plate, and its material is also selected from a transparent polymer material. Similarly, in order to achieve the characteristics of bending recovery, the material of the transparent substrate is the same as that selected in the first embodiment, and may be made of a flexible polymer material. Therefore, the selected material has two characteristics of transparency and flexibility. The transparent substrate can be made of one kind of flexible transparent polymer material, or it can be made of a composite of two or more kinds of flexible transparent polymer materials. Specifically, preferably it is selected from at least one of polycarbonate, polyethylene terephthalate, polyimide, and polymethyl methacrylate. In this embodiment, polycarbonate is selected to make the transparent substrate 100. The above materials can be replaced at will without affecting the implementation of the present disclosure. The shape of the transparent substrate 100 is matched with the structure of the display component to be protected. The present disclosure is not limited, and an applicable shape meets the requirements of the present disclosure.

The transparent substrate 100 is provided with a cavity 200, and the cavity 200 is used for filling a transparent shear thickening fluid. The depth of the cavity 200 must first satisfy: the impact absorption capacity generated by the filled shear thickening fluid can at least resist the impact that the display device generally suffers, such as falling from a high place, impact by an object, etc. Also, one must, based on the thickness of the transparent substrate 100, determine the depth and number of the cavities 200, as well as the setting position. Preferably, a plurality of the cavities 200 are arranged in matrix in the transparent substrate 100.

According to different requirements for transparency and impact resistance, the structural size of transparent substrate 100, the structure, location, size, and quantity of cavity 200 are related to the pixels of the light emitting layer. The shape and size of the cavity 200 are consistent with the shape and size of the pixel of the light emitting layer to reduce the optical impact caused by the uneven material. Generally, the size and shape of the cavity can be designed to be consistent with the pixel of the light emitting layer, or a cavity can correspond to one pixel unit or a group of repeated pixel units.

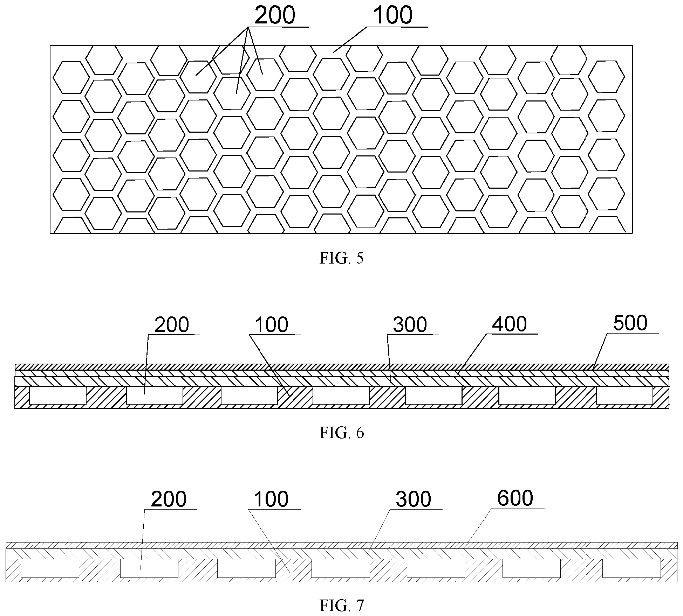

Preferably, the shape of the cross section of the cavity 200 is curved or polygonal. As shown in FIG. 3, the shape of the cavity 200 is cylindrical, and the cross section is circular. As shown in FIG. 4, the shape of the cavity 200 is quadrangular, and the cross section is rectangular. As shown in FIG. 5, the shape of the cavity200 is hexagonal, and the cross section is a hexagon.

Defining the cavity 200 in the transparent substrate can be made by nano imprint technology. For example, hot stamping technology is used to imprint the desired pattern on the transparent substrate to form the cavity 200.

The coating 300 is used to enclose the cavity 200. The coating 300 can be set one-to-one with respect to the cavity 200; each coating 300 corresponds to and encloses one cavity 200. Also, multiple coatings 300 can be set and one coating 300 corresponds to multiple cavities 200. Also, a single coating 300 can be set and all the cavities 200 are enclosed by the single coating 300. There are multiple ways of enclosing, such as fixing the coating 300 on the flexible substrate 101 by bonding or hot melting. The material used for the coating 300 is also a flexible transparent polymer material, which can be the same as or different from that of the transparent substrate 100. The coating 300 is attached to the transparent substrate 100 by hot melting glue, UV curing glue or hot melting. In this embodiment, the coating 300 is made of polycarbonate, and the coating 300 also uses a hot melting glue to bond the transparent substrate to enclose the cavity 200 between the coating 300 and the transparent substrate.

In addition to the above structure, the surface of the transparent substrate 100 may be further provided with at least one of an anti-reflection coating 400 and an anti-glaring coating 500. As shown in FIG. 6, the surface of the transparent substrate 100 is provided with both an anti-reflection coating 400 and an anti-glaring coating 500. In other embodiments, only the anti-reflection coating 400 or the anti-glaring coating 500 may be formed on the surface of the transparent substrate 100. The anti-reflection coating 400 or anti-glaring coating 500 reduces reflection on the internal air interface of the display device. The anti-reflection coating 400 and the anti-glaring coating 500 can be coated by using existing materials and technologies, and are not repeated here.

In order to further prevent scratches, as shown in FIG. 7, the surface of the transparent substrate 100 may further be provided with a hardened layer 600 to reduce the impact of surface scratches to the display. The hardened layer 600 can also be coated with existing materials and technologies, and is not repeated here.

One may select one or two out of the anti-reflection coating 400, the anti-glaring coating 500, and the hardened layer 600 for disposing, or disposing all three. The disposing order is that the hardened layer 600 is on the outermost layer, and the anti-reflection coating 400 and the anti-glaring coating 500 are in the inner layer, where the order between the two is selected at will.

The part for impact resistance is the transparent shear thickening fluid filled in the cavity. The shear thickening fluid includes the dispersed phase and the dispersed medium, and the dispersed phase is dispersed in the dispersed medium to form the suspension or the gel. The selection of the shear thickening fluid may be the same according to the embodiments, and details are not described herein again. In this embodiment, silica is selected as the dispersed phase, and isopropyl alcohol is used as the dispersed medium.

### Impact resistance test:

### Experiment procedure:

1. Select polycarbonate material and use nano imprint technology to prepare a transparent substrate with a cavity;
2. Fill the cavity in the transparent substrate with transparent thick thickening fluid;
3. Attach a layer of coating enclosing the cavity by melting and bonding to obtain a transparent substrate with a thickness of 0.25 mm;
4. Attach the encapsulated transparent substrate to the surface of the display device panel with optical adhesive;
5. Use polycarbonate material to manufacture a transparent substrate of the same thickness without cavities. As a comparative example, it is also attached to the surface of the display device panel by optical adhesive;
6. Use a steel ball of 50 grams to freely fall from a height of 5 cm onto the surfaces of the above-mentioned two display panels, and check the display panel function and its working condition.

### Test results:

| Impact times | 1 | 3 | 5 | 7 | 9 | 11 | 13 | 15 | 20 |
|---|---|---|---|---|---|---|---|---|---|
| The invention | normal | normal | normal | normal | normal | normal | normal | normal | normal |
| Comparativ e example | flashin g | No displa y | No displa y | No displa y | No displa y | No displa y | No displa y | No displa y | No displa y |

From the above tests, it can be seen that the display of the present disclosure can work normally under twenty times of impacts, while the comparative example that uses a flexible material without cavities shows no display at all after twice impacts, thereby indicating that the covering plate of the present disclosure has a very strong impact resistance. Therefore, the material of the present disclosure achieves both bending and impact resistance.

## Claims

1. A flexible material for impact protection, comprising a flexible substrate and a coating, wherein the flexible substrate is provided with a cavity; the cavity is filled with a shear thickening fluid; the coating covers and is fixed on the flexible substrate to enclose the cavity filled with the shear thickening fluid.

2. The flexible material for impact protection according to claim 1, wherein the coating is fixed on the flexible substrate by bonding or hot melting.

3. The flexible material for impact protection according to claim 1, wherein both the flexible substrate and the coating comprise a flexible polymer material.

4. The flexible material for impact protection according to claim 3, wherein the flexible substrate and the coating are made of one flexible polymer material, or the flexible substrate and the coating are made of a composite of two or more types of flexible polymer materials.

5. The flexible material for impact protection according to claim 3, wherein the flexible polymer material is selected from at least one of polycarbonate, polyethylene terephthalate, polyimide, and polymethylmethacrylate.

6. The flexible material for impact protection according to any of claims 1-5, wherein the shear thickening fluid comprises a dispersed phase and a dispersed medium, and the dispersed phase is dispersed in the dispersed medium to form a suspension or a gel.

7. The flexible material for impact protection according to claim 6, wherein the dispersed phase is nanoparticle, and a particle size of the nanoparticle is 20-500 nm.

8. The flexible material for impact protection according to claim 7, wherein the nanoparticle is spherical, ellipsoidal, pie-shaped, or an edgeless irregularly shaped particle.

9. The flexible material for impact protection according to claim 6, wherein the dispersed phase is nanoparticle made of crushed natural minerals or nanoparticle made of a high polymer.

10. The flexible material for impact protection according to claim 9, wherein the dispersed phase is selected from at least one of silicon dioxide, polystyrene, polymethyl methacrylate, calcium carbonate, Al₂O₃, or glass microspheres.

11. The flexible material for impact protection according to claim 6, wherein the dispersed medium is a compound of one or more of water, organic solution, and salt solution.

12. The flexible material for impact protection according to claim 11, wherein the organic solution is selected from at least one of ethanol, isopropanol, glycerol, vinyl ethanol, and polyethylene glycol.

13. The flexible material for impact protection according to claim 11, wherein the salt solution is selected from a buffer solution or a sodium chloride solution.

14. The flexible material for impact protection according to claim 11, wherein the compound is selected from a mixture of glycerin and water.

15. A flexible cover for impact protection, made of a flexible material for impact protection according to any of claims 1-14, wherein the flexible substrate is a transparent substrate conforming to a shape of a protected OLED device; the cavity is located corresponding to a pixel of a plurality of pixels of a light emitting layer of the OLED device; the coating is a transparent coating attached to and fixed on the transparent substrate to enclose the cavity; the shear thickening fluid in the cavity is selected from a transparent material.

16. The flexible cover for impact protection according to claim 15, wherein the flexible substrate further defines a plurality of other cavities therein, the cavities comprising the cavity and the other cavities are arranged in matrix in the flexible substrate, and a shape and a size of each of the cavities matches a shape and a size of a corresponding one of the pixels of the light emitting layer.

17. The flexible cover for impact protection according to claim 15, wherein a shape of a cross section of the cavity is curved or polygonal.

18. The flexible cover for impact protection according to claim 15, wherein at least one of an anti-reflection coating and an anti-glaring coating is formed on a surface of the flexible substrate.

19. The flexible cover for impact protection according to claim 15, wherein a hardened layer is formed on a surface of the flexible substrate.
